(19) **Europäisches Patentamt**

**European Patent Office**

**Office européen des brevets**

(11) **EP 0 945 794 B1**

(12) **EUROPEAN PATENT SPECIFICATION**

(45) Date of publication and mention
of the grant of the patent:
**15.10.2003 Bulletin 2003/42**

(51) Int Cl.⁷: **G06F 9/45**, G06F 9/318,
G06F 9/32

(21) Application number: **98105604.7**

(22) Date of filing: **27.03.1998**

(54) **Method for storing data structures in a memory**

Verfahren zum Speichern von Datenstrukturen in einem Speicher

Méthode pour stocker des structures de données dans une mémoire

(84) Designated Contracting States:
**DE FR GB IT**

(43) Date of publication of application:
**29.09.1999 Bulletin 1999/39**

(73) Proprietor: **MOTOROLA, INC.**
**Schaumburg, IL 60196 (US)**

(72) Inventors:
• **Ben-Ephraim, Arie**
**Herzlia 46588 (IL)**
• **Saper, Alexandre**
**Oranit 41833 (IL)**
• **Ginsberg, Avi**
**Even Yehuda 40500 (IL)**

(74) Representative: **Gibson, Sarah Jane et al**
**Motorola**
**European Intellectual Property Section**
**Law Department**
**Midpoint**
**Alencon Link**
**Basingstoke, Hampshire RG21 7PL (GB)**

(56) References cited:
**EP-A- 0 271 187**

• **PARKER J R: "A study of record packing
methods" SIGPLAN NOTICES, MARCH 1987,
USA, vol. 22, no. 3, pages 71-77, XP002076173
ISSN 0362-1340**
• **WOLFE A ET AL: "Executing compressed
programs on an embedded RISC architecture"
25TH ANNUAL INTERNATIONAL SYMPOSIUM
ON MICROARCHITECTURE. MICRO 25,
PORTLAND, OR, USA, 1-4 DEC. 1992, vol. 23, no.
1-2, pages 81-91, XP002076174 ISSN 0163-5751,
SIGMICRO Newsletter, Dec. 1992, USA**

**Description**

<u>Field of the Invention</u>

The present invention generally relates to computer systems and, more particularly, to methods and to systems for storing and retrieving data structures in and from memory.

<u>Background of the Invention</u>

Embedded systems technology has become an important aspect of our daily life, starting with remote control devices for TV sets up to automotive engine control and navigation systems. Embedded systems development must take into account design constraints on size, weight, power consumption and other cost related parameters.

The performance benefits of adopting Reduced Instruction Set Computer (RISC) architectures in embedded systems are well recognized in the art. RISC offer efficient and small cores. In comparison to Complete Instruction Set Computers (CISC), the RISCs suffers from relatively large instruction sizes and need therefore more memory space for the software program.

The program, and generally any data structure, should be stored with a high code density. This can be achieved, for example, by off-line compressing and decompressing before execution. However, such an approach requires additional memory space for permanently or temporarily storing expanded instructions (e.g., a cache). Despite falling prices for some kind of memory (e.g., disks), memory space is still precious in embedded or similar systems.

There is a technical task to develop storing and retrieving methods which substantially do not require additional space. The present invention seeks to provide methods and computer systems which mitigate or avoid these and other disadvantages and limitations of the prior art.

<u>Brief Description of the Drawings</u>

| FIG. 1 | illustrates a simplified block diagram of an execution system and a compiler system in which methods of the present invention are applied; |
| FIG. 2 | illustrates a simplified block diagram of an instruction word with instruction portions and a code word with code portions; |
| FIG. 3 | illustrates a simplified block diagram of a memory of the execution system of FIG. 1 which is virtually partitioned according to a storage method of the present invention; |
| FIG. 4 | illustrates a simplified flow chart diagram of the storage method; |
| FIG. 5 | illustrates a simplified block diagram of an address used in a preferred embodiment of the storage method; |
| FIGS. 6-1 to 6-3 | illustrate memory lines of the memory of FIG. 3 as they are used in the first embodiment; and |
| FIG. 7 | illustrates a simplified flow chart diagram of a retrieval method according to the present invention. |

<u>Detailed Description of a Preferred Embodiment</u>

The present invention can be used, for example, in an embedded system which combines the advantages of RISC performance and compressed instruction storage. Decompressing can take place *during* program execution, and not substantially *before* execution. Intermediate memories (e.g., caches) are substantially not required. The present invention can save memory of external memories (e.g., disks) and internal memories (e.g., RAM, ROM). Also, existing development tools for prior art systems can be used with only minor modifications. These and other advantages of the present invention are explained in the following description.

For convenience, a glossary of terms is provided prior to the claims. As used herein, the symbol @ is optionally used to combine reference numbers and indices when needed for explanation.

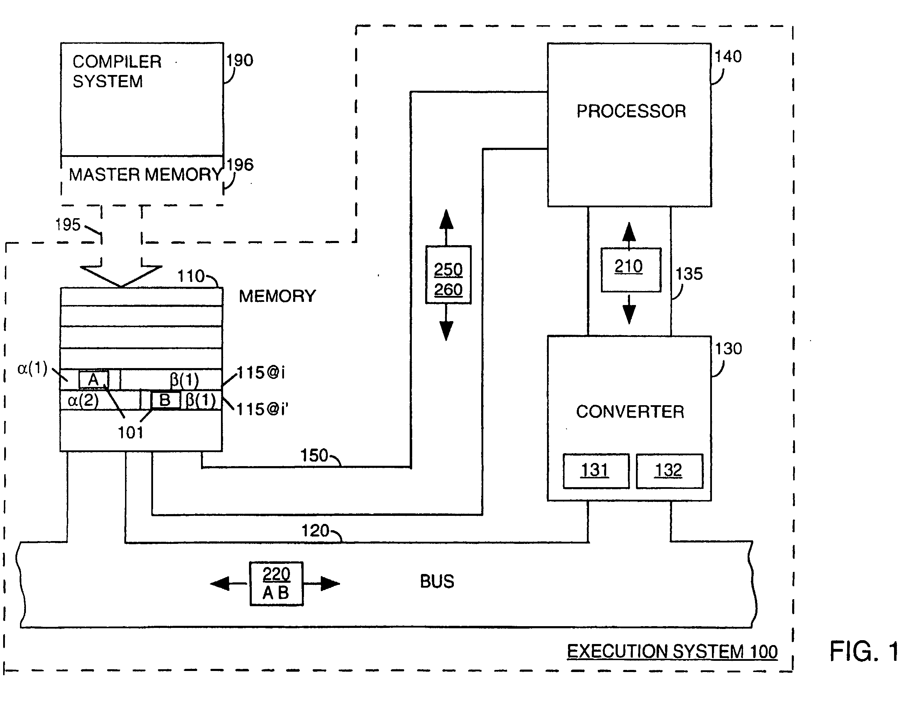

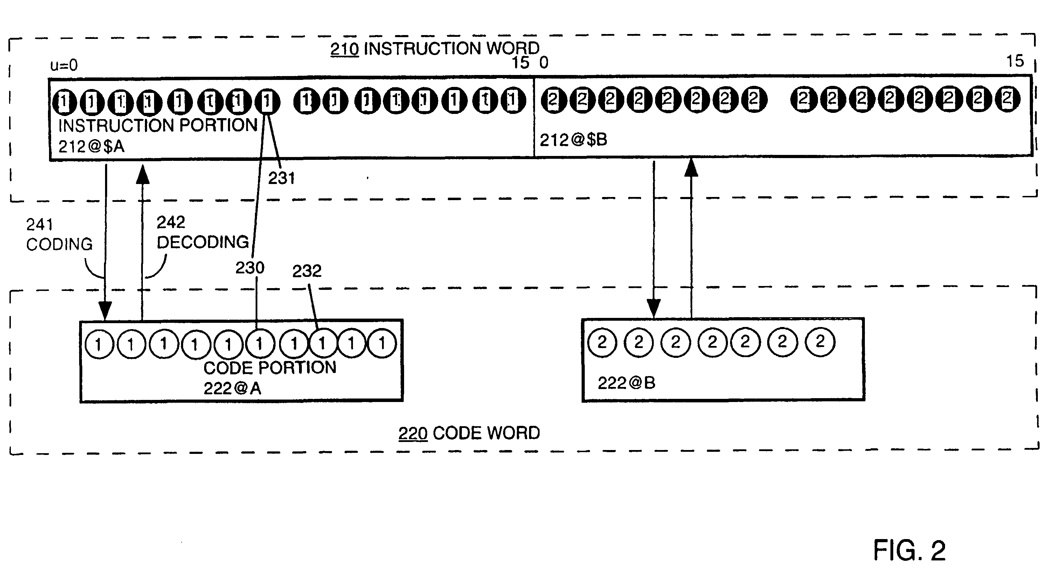

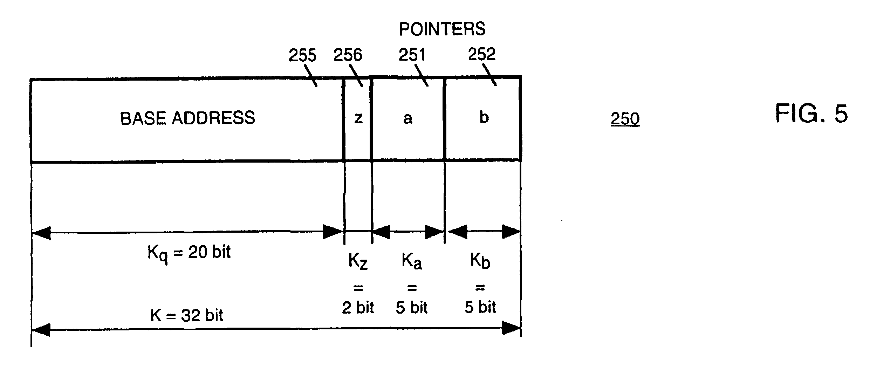

FIG. 1 illustrates a simplified block diagram of execution system 100 (dashed frame) and compiler system 190 in which methods of the present invention are applied. Preferably, execution system 100 comprises memory 110, data bus 120, converter 130, instruction bus 135, processor 140, and address bus 150. Preferably, converter 130 comprises P $\geq$ 2 decoders (e.g., decoders 131 and 132). Memory 110 comprises a plurality of memory lines 115. Some or all of memory lines 115 are virtually divided into P $\geq$ 2 partitions (e.g., partitions $\alpha$ and $\beta$, details later). The partitions have varying lengths to accommodate different data length stored therein. In other words, partitions are defined by dynamic boundaries. Memory 110 is coupled to data bus 120 which forwards compressed code words 220 (details in FIG. 2) to converter 130. Converter 130 expands code words 220 and sends instruction words 210 (cf. decoding 242 in FIG. 2) to processor 140 via bus 135. Optionally, converter 130 can bypass some code words 220 and send them as instruction words 210 without expanding. The bypass option can be supported, for example, by an indication within code words 220 or by additional control signals from processor 140. Optionally, processor 140 sends addresses 250 (details in FIG. 5) to memory 110 via address bus 150. Code words 220 in memory 110 can also have the function of addresses 250 so that address information can also go from memory 110 to processor 150.

Optionally, busses 120, 135 and 150 are bi-directional busses which can also carry instruction words 210 from processor 140 to converter 130, code words 220 from converter 130 to memory 110, or addresses 250 from processor 140 to memory 110.

For the purpose of explanation, it is assumed that addresses 250 and data words 220 can all be stored in memory lines 115 of memory 110. Optionally, memory 110 can be divided into areas for code words 220 and for addresses 250. But this is not essential for the present invention.

Compiler system 190 is illustrated as being temporarily coupled to memory 110 of execution system 100 via bus 195 (dashed) and, optionally via master memory 196 (dashed). According to a storage method (e.g., method 300) of the present invention, compiler system 190 stores data structure 101 (e.g., pluralities of code portions A and B) with compressed instructions, data and addresses in memory 110 of execution system 100. For example, portion A goes into partition $\alpha$ and portion B goes into partition $\beta$ of an adjacent memory line 115@i'. Using partitions in adjacent lines is an important aspect of the present invention. Details for data structure 101 in memory 110 are explained later. Preferably, compiler system 190 is coupled to execution system 100 once before operation of execution system 100. It is also possible, that compiler system 190 writes data structure 101 first to master memory 196. Then, second data structure 101 is exported to many execution systems 100. For simplicity of further explanations, master memory 196 and memory 110 should be assumed to be similar so that the term "memory 110" includes also memory 196.

According to a retrieval method of the invention (e.g., method 400), memory 110 retrieves data structure 101 and sends data words 220 to converter 130. Preferably, the retrieval method is applied at run time of execution system 100. Retrieving takes advantage from storing data structure 101 according to the present invention. The retrieval method can be considered as an inverse method in respect to the storage method.

Details for the operation of data bus 120, converter 130, address bus 150, and processor 140 are not subject of the present invention and are therefore not explained further. It is known in the art, how to provide, for example, busses, decoders and central processing units (CPUs) so that those of skill in the art are able to implement these system elements without the need for further explanation.

It is an important advantage of the present invention, that the software program stored in compressed form in memory 110 need less space than a similar program stored uncompressed.

Also, buses 120 and 150, convener 130 and processor 140 of execution processor 100 can conveniently be embedded into a single semiconductor substrate. The present invention is especially suitable when processor 140 is a RISC machine.

FIG. 2 illustrates a simplified block diagram of instruction word 210 (dashed frame) with instruction portions 212@$A and 212@$B and code word 220 (dashed frame) with code portions 222@A and 222@B. Instruction word 210 can be transformed to code word 220 and vice versa. In the following, code portions 222@A and 222@B are conveniently referred to as portions A and B, respectively. The division of words 210 and 220 into P = 2 portions each (A and B) is intended to be a non-limiting example. Those of skill in the art, are able, based on the description herein, to apply the present invention also for $P \geq 2$. Pluralities of code portions A and B stored in memory 110 form data structure 101 (cf. FIG. 1). Splitting the words into portions is an advantage of the present invention and saves operation time. Parallel operating devices, such as, for example decoders 131 and 132, need less time to transform separate portions than a single device would need to transform a complete word.

In FIG. 2 and in other figures, data units 230, which are not further divided, have symbols ❶, ❷, ①, ② or simply ○. Preferably, data units 230, for convenience hereinafter "bits", represent binary quantities with logical "0" and "1" values, as the case may be. But this is only a convention used for the simplicity of explanation. Those of skill in the art are able, based on the description herein, to use other values. The actual value (e.g., "0" or "1") of bits 230 is not important for the present invention.

Conveniently, instruction portions 212@$A and 212@$B each have U instruction bits 231 (e.g., U = 8 bits ❶ and U = 8 bits ❷, respectively). The lengths $V_A$ and $V_B$ (collectively V) of code portions A and B, respectively, can vary. Portion A has $V_A$ code bits 232 (e.g., $V_A$ = 10 bits ① ) and portion B has $V_B$ code bits 232 (e.g., $V_B$ = 7 bits ② ).

The numbers V of code bits 232 are limited by a minimum number $V_{MIN}$ ("bounded code") and a maximum number $V_{MAX}$, that is:

$$V_{MIN} \leq V \leq V_{MAX} \tag{2.1}$$

with the $\leq$ symbol for smaller than or equal to. In the example used for explanation herein, V can assume the following values:

$$3 \leq V \leq 12. \tag{2.2}$$

Having equal MIN-MAX numbers for portions A and B is convenient for explanation, but not necessary for the invention. Optionally, the numbers can also be different, that is:

$$V_{A\ MIN} \neq V_{B\ MIN} \tag{2.3}$$

$$V_{A\ MAX} \neq V_{B\ MAX} \tag{2.4}$$

As shown by unidirectional arrows, coding 241 transforms instruction portion 212@\$A to code portion A and instruction portion 212@\$B to code portion B. Preferably, coding is performed with compression so that $V \leq U$. This is convenient, but not essential for the present invention. Preferably, decoding 242, is performed by expanding in, for example, decoders 131 and 132. Code portion A and B are re-transformed to instruction portions 212@\$A and 212@\$B, respectively.

Methods and devices for coding and decoding are well known in the art. The following reference [1] ] gives an introduction to coding and decoding: Bernard Sklar: "DIGITAL COMMUNICATIONS Fundamentals and Applications", published by Prentice Hall, Englewood Cliffs 1998, ISBN 0-13-211939-0, especially chapter 11.6 "Source Coding" on pages 595-667. Therefore, persons of skill in the art are able, based on the description herein, to practice the present invention using known coders and decoders (e.g., in compiler system 190 and decoders 131/132 of converter 130) without the need for further explanation. Conveniently, code words 220 used in the present invention are Huffman coded (see sub-chapter 11.6.2 of [1] with a coding tree). The Huffman code is a prefix-free code (e.g., no additional bits between ① and ② required) and a variable length code (e.g., lengths V are different). Huffman coding (e.g., coding 241) is assumed here only for the purpose of explaining the present invention and not intended to be limiting.

The present invention can also be applied for encrypting or decrypting data. Preferably, the number of possible variations (e.g., $2^{(U*P)}$) of instruction bits 231 is adapted for RISC processors (e.g., processor 140).

As explained later, compiler system 190 receives instruction words 210, performs coding 241, and writes portions A and B to adjacent memory locations in memory 100. When execution system 100 operates, converter 130 receives portions A and B substantially simultaneously or with a time delay which can be neglected. In converter 130, decoder 131 of converter 130 decodes (cf. step 242) portion A to instruction portions 212@A; and decoder 132 decodes portion B to instruction portion 212@B. Decoders 131 and 132 operate substantially in parallel and provide instruction word 210 substantially to processor 140 in a just-in-time schedule at processor run time. Extra memory (e.g., cache) to store instruction words is not required. This is an important advantage of the present invention.

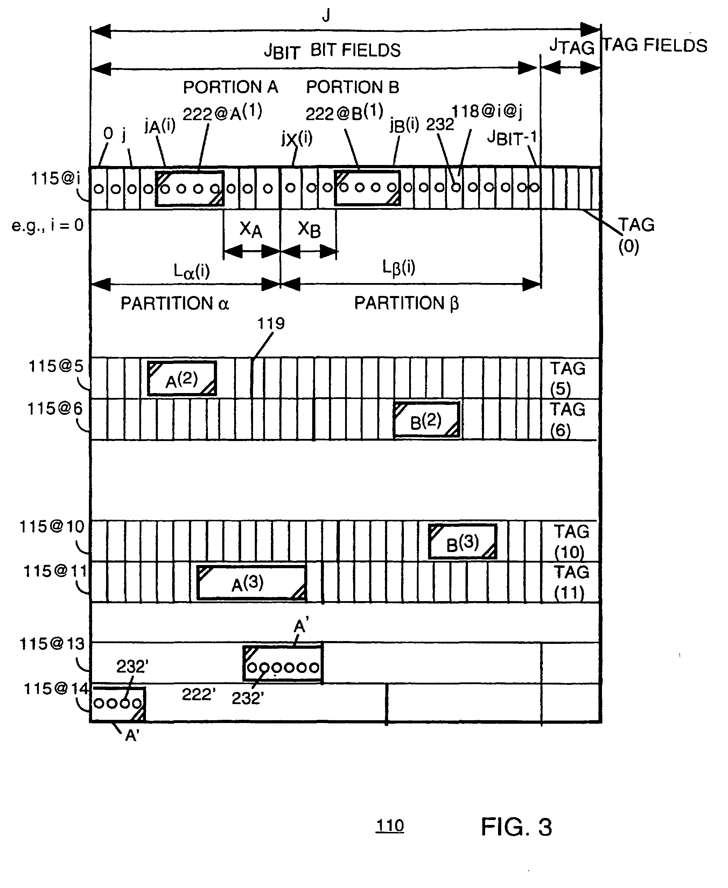

FIG. 3 illustrates a simplified block diagram of memory 110 of execution system 100 of FIG. 1 which is virtually partitioned according to a storage method of the present invention. Memory 110 has memory lines 115@i with line index i = 0 to I-1, wherein e.g., I = 14 is not important for the invention. For simplicity, FIG. 3 illustrates only memory lines 115@0, 115@5, 115@6, 115@10, 115@11, 115@13 and 115@14. Line number I is usually much higher, e.g., I = $2^{22} \approx 4.000.000$. Preferably, each memory line 115@i has J memory fields 118@i@j identified by line index i and position index j = 0 to J-1 (e.g., J = 32). A number of $J_{BIT}$ (e.g., $J_{BIT}$ = 27) fields are "bit fields" and store code bits 232 (cf. FIG. 2, O symbols). A number of $J_{TAG}$ (e.g., $J_{TAG}$ = 5) fields are "tag fields" and store a line tag T(i). The numbers are related as:

$$J_{BIT} + J_{TAG} = J \tag{3.1}$$

For convenience, FIG. 3 has double-arrowed measuring lines for bit numbers. Preferably, the positions of the bit fields and tag fields within the range between j = 0 and j = J-1 are constant. In the example, of FIG. 3, bit fields have position indices between j = 0 and ($J_{BIT}$ - 1) (e.g., 0 and 26). Tag fields have position indices between j = (J - $J_{TAG}$) and (J-1) (e.g., 27 and 31) shown on the right side.

In each memory line 115@i, line tag T(i) is a partition indicator and classifies the plurality of bit fields into P $\geq$ 2 partitions. For convenience of explanation, assume, that P has the value P = 2 (as in FIG. 2). Hereinafter, partitions are referred to as "partition $\alpha$" and "partition $\beta$". T(i) conveniently comprises a representation for partition index $j_X(i)$.

In the example of FIG. 3, the 5 bits of T(i) can identify any number $j_X(i)$ between 0 and $J_{BIT}-1 \leq 2^5$. For example, T(0) of memory line 115@0 points to $j_X(0) = 11$ and partition $\alpha$ comprises the 11 bit fields 118 from j = 0 to j = 10 and partition $\beta$ comprises the 16 bit fields 118 from $j = j_X(0) = 11$ to $j = J_{BIT}-1 = 26$. Using $J_{BIT}$ and position index $j_X(i)$, partition lengths $L_\alpha(i)$ and $L_\beta(i)$ can be defined as follows:

$$L_\alpha(i) + L_\beta(i) = J_{BIT} \tag{3.2}$$

$$L_\alpha(i) = j_X(i) \tag{3.3}$$

$$L_\beta(i) = J_{BIT} - L_\alpha(i) \tag{3.4}$$

In other words, $L_\alpha$ is a complement to $L_\beta$. Primed index i' which identifies memory line 115@i' is used accordingly. For convenience of explanation, boundary 119 is illustrated in each memory line 115@i between memory field 118@i@($j_X$(i)-1) and field 118@i@$j_X$(i). Boundary 119 is virtual and used only for convenience of explanation. In a real hardware implementation of memory 110 there is no need for a boundary.

According to the invention, compiler system 190 writes portions A into partition $\alpha$ of memory line 115@i and portion B into partition $\beta$ of memory line 115@i' (primed), wherein memory lines 115@i and 115@i' are adjacent lines. Portions are illustrated by partly hatched boxes (reference 222) surrounding the $V_A$ and $V_B$ code bits ○. The term "adjacent" used herein is intended to include that memory lines 115@i and 115@i' can be single memory line 115@i = 115@i' or two lines which are located at a predetermined line distance d between i' and i:

$$d = |\, i' - i \,| \tag{3.5}$$

Symbols | | stand for absolute values. "Adjacent" should also include, that portion A can have code bits 232 stored in memory line 115@i and further code bits 232 stored in memory line 115@(i+1). FIG. 3 gives an example by portion A' (reference 222') having first code bits 232' in partition $\alpha$ of line memory 115@13 and further code bits 232" in partition $\alpha$ of memory line 115@14. Similarly, portion B can have code bits 232 stored in memory lines 115@i' and memory lines 115@(i'+1). Preferably, line distance d is one: d = 1. This is convenient, but other values for d can also be used. For d = 1, three cases ("instruction placements") can be distinguished: In case (1), both portions A and B are stored in single memory line 115@i (e.g., portions A[(1)] and B[(1)] in memory line 115@0); in case (2), portion A is stored in memory line 115@i and portion B is stored in next memory line 115@(i+1) (e.g., A[(2)] in memory line 115@5 and B[(2)] in memory line 115@6): and in case (3), portion A is stored in line i and portion B is stored in line i-1 (e.g., B[(3)] in memory line 115@10 and A[(3)] in memory line 115@11). Superscripts (1), (2) and (3) are used here to distinguish portions in different lines. In other words, portion A is stored in line i and portion B is stored in primed line i', wherein

$$i' = i \qquad \text{for case (1) common line for A and B} \tag{3.6}$$

$$i' = i+1 \qquad \text{for case (2) consecutive lines for A and B} \tag{3.7}$$

$$i' = i-1 \qquad \text{for case (3) consecutive lines for B and A} \tag{3.8}$$

$$|\, i - i' \,| \leq 1. \tag{3.9}$$

According to the storage method (e.g., method 300), compiler system 190 partitions consecutive memory lines 115@i such that i and i' are within the line distance d. Using adjacent memory lines 115@i and 115@i' for storing portions A and B is convenient for retrieving and is therefore an important advantage of the present invention. According to the retrieving method (e.g., method 400, details later), converter 130 can read portions A and B substantially simultaneously so that decoders 131 and 132 can receive portions A and B, respectively, substantially simultaneously.

For further explanation, it is convenient to define start position $j_A(i)$ and $j_B(i')$ for portions A and B, respectively.

A start position $j_A(i)$ within memory line 115@i indicates memory field 118@i@j ($j = j_A$) which stores the first code bit 232 of portion A. The $V_A$ code bits of portion A are counted in a first direction, that is:

$$\text{from } j_A(i) \text{ to } (j_A(i) + V_A - 1) \tag{3.10}$$

with

$$0 \leq j_A(i) \text{ and } (j_A(i) + V_A - 1) < (j_X(i) - 1) \tag{3.11}$$

such as, for example, from the left to the right. In the example of FIG. 3, portion $A^{(1)}$ with $V_A^{(1)} = 4$ code bits 232 start at $j_A = 4$ and ends at $j = 7$. Similarly, start position $j_B(i')$ indicates memory field 118@i'@j ($j = j_B$) in memory line 115@i' which stores the first code bit 232 of portion B. The $V_B$ code bits are counted in a second, opposite direction, that is:

$$\text{from } j_B(i') \text{ to } (j_B(i) - V_B) \tag{3.12}$$

with

$$J_{BIT} - 1 \geq j_B(i') \text{ and } (j_B(i') - V_B) \geq j_X(i') \tag{3.13}$$

In case of portions going over 2 memory lines, $V_A$ and $V_B$ can be replaced by $V'_A \leq V_A$ and $V'_B \leq V_B$ which indicate the numbers of code bits in memory lines 115@i and 115@i', respectively. In this case, the remaining $V_A - V'_A$ code bits of portion A are stored in memory line 115@(i+1); and the remaining $V_B - V'_B$ code bits of portion B are stored in memory line 115@(i'+1). The end positions of portions A and B are conveniently not identified. It is possible to send also the remaining code bits (e.g., from $j_A + V_A - 1$) to ($j_X - 1$)) stored in partitions $\alpha$ and $\beta$ to converter 130. If Huffman coding is used, then decoders 131 and 132 can detect portion lengths $V_A$ and $V_B$ automatically.

In order to reduce $J_{TAG}$, allowable values for position index $j_X(i)$ can be limited. For example, $j_X(i)$ could be within a minimum/maximum range, that is:

$$j_{X\,MIN} \leq j_X(i) \leq j_{X\,MAX} \tag{3.14}$$

Or, $j_X(i)$ should be an even number

$$j_{X\,MIN} = 0, 2, 4, .. \tag{3.15}$$

For convenience of explanation, and intended to give a nonlimiting example, the embodiments of the present invention are explained with $J_{BIT} = 31$ bits, $j_X(i)$ with an allowable range of only two numbers and T(i) being a single bit. According to T(i), partition length $L_\alpha(i)$ and $L_\beta(i)$ (collectively L) can assume values between a minimum value $L_{MIN}$ and a maximum value $L_{MAX}$, that is

$$L_{MIN} \leq L \leq L_{MAX} \tag{3.16}$$

e.g.,

$$L_{MAX} = L_{\alpha\,MAX} = L_{\beta\,MAX} = 19 \text{ bits} \qquad \text{"long"} \tag{3.17}$$

e.g.,

$$L_{MIN} = L_{\alpha\,MIN} = L_{\beta\,MIN} = 12 \text{ bits} \qquad \text{"short"} \tag{3.18}$$

The partition lengths can be coded, for example, as follows:

$$L_\alpha(i) = L_{MAX} \text{ and } L_\beta(i) = L_{MIN} \text{ for } T(i) = 0 \qquad (3.19)$$

$$L_\alpha(i) = L_{MAX} \text{ and } L_\beta(i) = L_{MIN} \text{ for } T(i) = 1 \qquad (3.20)$$

For further explanation it is convenient to introduce field distances $X_A(i)$ and $X_B(i)$ in memory line 115@i. In the following, index i is not written for simplicity. Field distance $X_A$ is defined as the number of bit fields 118 between portion A and identifier $j_X$ (at boundary 119). The $X_A$ bit fields 118 belong to partition $\alpha$ and do not store code bits 232 of portion A (e.g., fields 115@i@($j_A+V_A$-1) to @($j_X$-1)). The fields are illustrated to the right of portion A. Field distance $X_A$ is conveniently calculated as:

$$X_A = j_X - j_A - V_A \qquad (3.21)$$

In the example of memory line 115@1 of FIG. 3, this means:

$$3 = 11 - 4 - 4 \qquad (3.22)$$

Accordingly, field distance $X_B$ is defined as the number of bit fields 118 between portion B and identifier $j_X$ (left of portion B). The $X_B$ fields 118 belong to partition $\beta$ and do not store code bits 232 of portion B. Field distance $X_B$ can be calculated as:

$$X_B = j_B - j_X + 1 - V_B \qquad (3.22)$$

$$3 = 17 - 11 + 1 - 4 \qquad \text{(example in line 115@1} \qquad (3.23)$$

Those of skill in the art are able, based on the description herein, to calculate $X_A$ and $X_B$ in a different way, but without departing from the scope of the present invention. Conveniently, the $X_A$ and $X_B$ bit fields 118 of partitions $\alpha$ and $\beta$, respectively, are referred to as "partition tails".

Memory 110 can also be described as a memory having address lines (such e.g., lines 115) for storing addresses (250 explained later) and data lines (e.g., lines 115) for storing pluralities of paired data portions (portions A and B), characterized in that

(i) the data lines are virtually partitioned (cf. boundary 119) and store first data portions in first partitions (e.g., A in $\alpha$) with first offsets (e.g., $j_A$) and store second data portions in second partitions (e.g., B in $\beta$) with second offsets (e.g. $j_B$), wherein the second partition is located in an adjacent data line (see cases (1), (2), (3));
(ii) the address lines comprise addresses each having (**i**) base addresses (e.g., 255 explained later) for identifying the data lines and (**ii**) pointers (e.g., **a** and **b**, explained later) which indicate the first and second offsets.

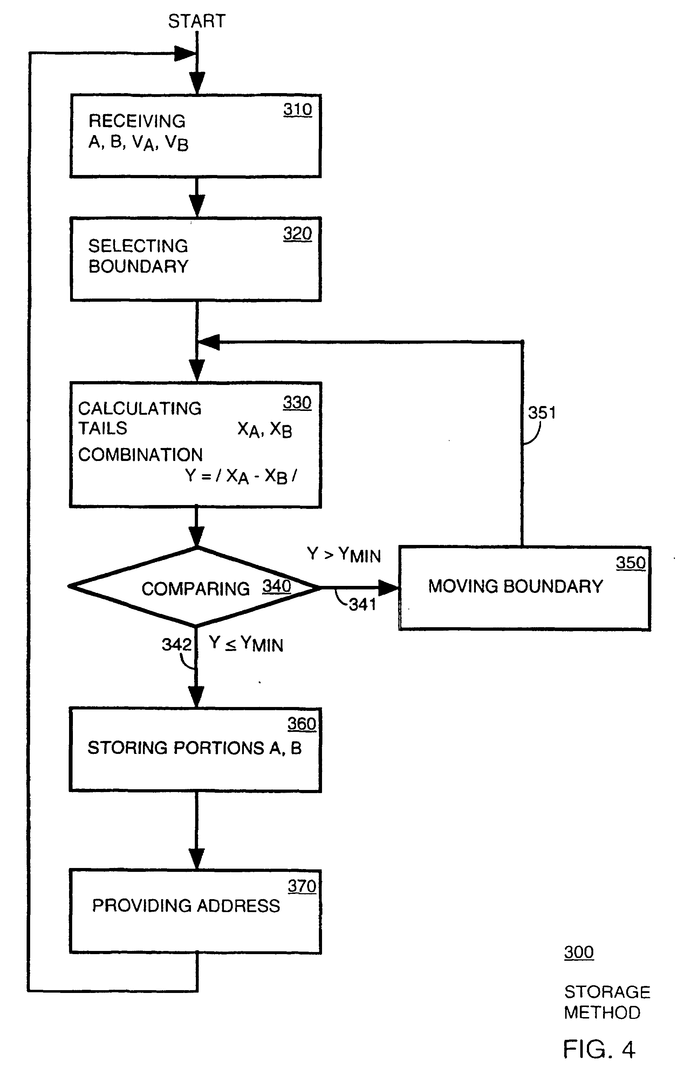

FIG. 4 illustrates a simplified flow chart diagram of storage method 300 of the present invention. According to method 300, compiler system 190 distributes portions A and B of variable lengths $V_A$ and $V_B$ to partitions $\alpha$ and $\beta$ such that the partitions are located in adjacent memory lines. Preferably, method 300 is used for storing code portions A and B, but can also be applied to store instruction portions $A and $B. The terms "data portion" and "portion" used to describe method 300 are intended to include code and instruction portions or similar bit combinations.

For convenience of explanation, assume that compiler system 190 performs method 300. However, this is not important for the invention. Persons of skill in the art, are able based on the description herein, to use system 100 or other means without the need for further explanation.

Method 300 comprises the following steps: receiving step 310, selecting step 320, calculating tails and combination step 330, comparing step 340, moving boundary step 350, storing step 360, and, optionally, providing address step 370.

In *receiving step* 310, compiler system 190 receives code portions A and B and lengths $V_A$ and $V_B$, respectively. In *selecting boundary step* 320, compiler 190 chooses any boundary identifier $j_X$. Identifier $j_X$ can be a random number between $j = 0$ and $J_{BIT-1}$. Conveniently, compiler system 190 takes $j_X$ from predetermined first, second, or further values. For example in memory lines with $J_{BIT} = 31$ bit fields 118, $j_X$ has either a first value of, e.g., $j_X = 12$ (partition $\alpha$ with 12 fields, partition $\beta$ with 19 fields) or a second value of, e.g., $j_X = 19$ ($\alpha$ with 19 fields, $\beta$ with 12 fields). In *calculating tails and combination step* 330, compiler system 190 obtains $X_A$ and $X_B$ distances, for example according to above mentioned equations (3.21) to (3.24). With such a calculation, $X_A$ and $X_B$ are obtained as if portions A and B would have been already written into line 115. Also, compiler calculates a distance combination Y. For example, Y is the absolute value (| | symbols) of the difference between $X_A$ and $X_B$, that is:

$$Y = |\,X_A - X_B\,| \tag{4.1}$$

Combination Y is an indication for the symmetry by which boundary 119 virtually divides the space between memory fields 118 which are designated for portions A and B. In *comparing step* 340, compiler system 190 compares combination Y to predetermined reference $Y_{MIN}$, such as, for example:

$$\text{(a) } Y > Y_{MIN} \tag{4.2}$$

$$\text{(b) } Y \leq Y_{MIN} \tag{4.3}$$

Preferably, reference $Y_{MIN}$ has a value of

$$Y_{MIN} = 1 \tag{4.4}$$

but other value can also be used. The next steps depend on alternatives (a) and (b). For alternative (a) on line 341, compiler system 190 stores portion A in partition $\alpha$ and portion B in partition $\beta$ in *storing step* 360. Compiler can store portions A and B in adjacent memory lines 115 according to cases (1), (2), and (3) which are, preferably, chosen at random. Also, in storing step 360, compiler system 190 writes tags T(i) and T(i') into memory lines 115. Then, optionally, in *providing address step* 370, compiler system 190 provides addresses with bases addresses and pointers **a** and **b** (see FIG. 5). The address can identify code portions A and B at any memory location (cf. jA(i), $j_B$(i')) within, for example, memory 110. This feature is especially important, when the address is part of a branch instruction and points to an instruction which is located far away from the branch instruction. Details for address definitions are explained later. For alternative (b) on line 341, in *moving boundary step* 350, compiler system 190 changes identifier $j_X$. Preferably, compiler system 190 changes $j_X$ such that Y becomes smaller and repeats (line 351) steps 350, 330 and 340 until case (a). In other words, boundary 119 is shifted until it is virtually located in the center (with e.g., $Y_{MIN} = 1$ allowable offset) between the portions. Now, compiler system 190 can repeat steps 310, 320, 330, 340, 350, 360 and 370 for further portions A and B for the same memory line 115 or for further memory lines 115.

Preferably, in the receptions of method step 360, a number $n_A$ of portions $A_1$, $A_2$, $A_3$ and so on (each with V... $\leq V_{A\ MAX}$) goes into a single partition $\alpha$ and a number $n_B$ of portions $B_1$, $B_2$, $B_3$ and so on (each with V... $\leq V_{B\ MAX}$) is written into a single partition $\beta$ of the same memory line 115. The numbers are conveniently related as:

$$n_A * V_{MIN} = n_B * V_{MAX} \tag{4.5}$$

In other words, method 300 can also be described as a method for storing a data structure (e.g., structure 101) in a memory (e.g., memory 110) comprising the steps of:

(1) receiving a first data portion (e.g., A) having a first length (e.g., $V_A$) and a second data portion (e.g., B) having a second length (e.g., $V_A$) (cf. step 310);
(2) selecting an identifier (e.g., $j_X$) (or a "boundary") which virtually partitions a memory line (e.g., line 115) into a first partition and a second partition (e.g., $\alpha$ and $\beta$) (cf. step 320);
(3) determining a first distance (e.g., $X_A$) between the boundary and the first portion, a second distance (e.g., $X_B$) between the boundary and the second portion, and a distance combination (e.g., Y) (cf. step 330);
(**4**) comparing (cf. step 340) the combination to a predetermined reference (e.g., $Y_{MIN}$) and (**a**) changing the boundary (cf. step 350), determining and comparing again or (**b**) storing the first portion in the first partition and the second portion in the second partition (cf. step 360).

Optionally, in storing step 360, compiler system 190 can store code portions into memory line 115 which do not convey an instruction. This portions are referred to hereinafter as "void portions". During retrieving (method 400), converter 130 can ignore a void portion and fetch the next portion. Or, converter 130 decodes the void portion to a non-operation instruction for processor 140. Void portions can have variable length. Using void portions is convenient to fill in gaps and to balance boundary 119.

In other words, method 400 can be described as a method for storing a data structure (e.g., structure 101) of pluralities of code portions (e.g., A, B) into pluralities of memory lines 115 which comprises the following steps: (**a**) providing a first portion (e.g., portion A) and a second portion (e.g., portion B); (**b**) assigning a first start position (e.g., $j_A$) of the first portion within a first line (e.g., line i), and assigning a second start position of the second portion; and (**c**) writing into a first partition (e.g., $\alpha$) of the first line: code bits of the first portion from the first start position in a first direction (e.g., to the right) and writing into a second partition (e.g., $\beta$) of the first line (e.g., as $\beta(1)$) or of a second line (e.g., as $\beta(2)$): code bits of the second portion from the second start position in a second, opposite direction (e.g., to the left), wherein partitions are chosen such, that first and second portions are stored in adjacent lines.

Further, method 400 can be described as a method for storing a data structure in memory with the following steps: (**a**) receiving first and second portions which in combination (e.g., A and B) belong to a single data word (e.g., code word 220), each code portion having a predetermined length (e.g., V); (**b**) virtually partitioning a first memory line and an second adjacent memory line into first and second partitions (e.g., $\alpha$ and $\beta$) by first and second partition indicator (e.g., $j_X(i)$, $j_X(i')$ defining boundaries 119); (**c**) writing the first code portions into the first partition and writing the second code portion into the second partition (e.g., A to $\alpha$, B to $\beta$); (**d**) writing representations of the first partition indicator (e.g., tag line T(i)) to the first memory line and of the second partition indicator to the second memory line (e.g., tag line T(i')); and (**e**) repeating the receiving, partitioning, and writing steps for further code portions (e.g., stored in next lines 115).

In the following, relations between pointers **a** and **b**, tags T(i) and T(i'), an optional indicator z, and the start positions $j_A(i)$ and $j_B(i)$ are explained.

FIG. 5 illustrates a simplified block diagram of address 250 used in the preferred embodiment of storage method 300 by way of example. Address 250 comprises K address bits which are distinguished as follows. $K_q$ bits form base address 255 which points to memory line 115@i; $K_z$ bits represent cases (1), (2) and (3) by location indicator z (256); $K_a$ bits represent pointer **a** (251); and $K_b$ bits represent pointer **b** (252). The bit numbers are related as:

$$K = K_q + K_z + K_a + K_b \tag{5.1}$$

Convenient values are, for example, K = 32, $K_q$ = 20 to point to $I \leq 2^{20}$ memory lines 115@i, $K_z$ = 2 for the 3 cases, and $K_a = K_b = 5$ which identify $j_X(i)$ by pointer **a** and $j_X(i')$ by pointer **b,** respectively.

Indicator z can be a pair of two dedicated bits z = ($z_1$, $z_2$) which indicate, for example:

$$z_2 = "1" : \text{case (1)} \tag{5.2}$$

$$z_1 = "1" \text{ and } z_2 \text{ any value: case (2)} \tag{5.3}$$

$$z_1 = "0" \text{ and } z_2 \text{ any value: case (3)} \tag{5.4}$$

In other words, indicator z in address 250 corresponds to tag T(i) and T(i') stored in memory 110.

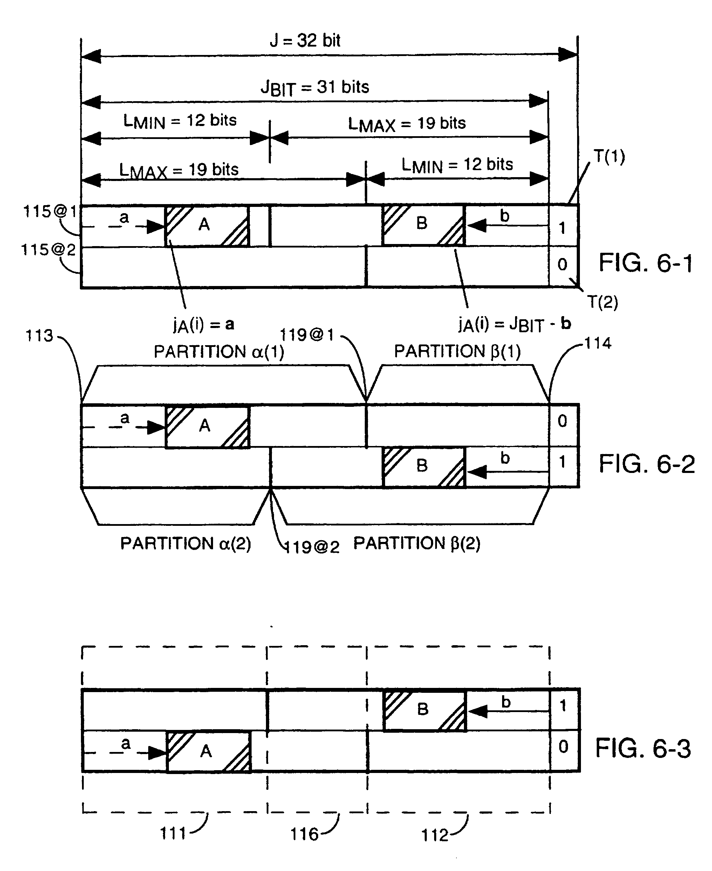

FIGS. 6-1 to 6-3 illustrate memory lines 115@1 and 115@2 of memory 110 of FIG. 3 as they are used for storing portions A and B in the preferred embodiment of the present invention. FIG. 6-1 to FIG. 6-3 correspond to cases (1), (2) and (3). Lines indices 1 and 2 are used here only for convenience and can stand for any adjacent lines: in FIG. 6-1, i = i' = 1; in FIG. 6-2, i = 1, i' = 2; and in FIG. 6-2 i = 2, i' = 1. For simplicity only, portions A and B are illustrated with equal sizes $V_A$ and $V_B$. But this is not important for the present invention. Boundaries 119@1 and 119@2 and tags T(1) and T(2) indicate the virtual partitioning of memory lines 115@1 and 115@2. Partitions $\alpha(1)$ and $\alpha(2)$ are illustrated left of boundaries 119@1 and 119@2, respectively; and partitions $\beta(1)$ and $\beta(2)$ are illustrated right of boundaries 119@1 1 and 119@2, respectively. Left edge 113 marks the begin of partitions $\alpha(1)$ and $\alpha(2)$ and right edge 114 marks the begin of partitions $\beta(1)$ and (2). For convenience, double-arrowed lines indicate e.g., J = 32 bit, $J_{BIT}$ = 31 bit, $L_{MAX}$ = 19 bit, and $L_{MIN}$ = 12 bit. Knowing indicator $(z_1, z_2)$ (cf. 256 in FIG. 5), pointer a identifies start position $j_A(i)$ of portion A to be in partition $\alpha(1)$ or $\alpha(2)$; and pointer **b** identifies start position $j_B(i')$ of portion B to be in partition $\beta(1)$ or $\beta(2)$. For convenience, pointer a is illustrated by a dashed arrow; and pointer **b** is illustrated by a plain arrow. Start positions related to pointers **a** and **b** as follows:

$$j_A(i) = a \qquad\qquad (6.1)$$

$$j_B(i') = J_{BIT} - b \qquad\qquad (6.2)$$

In other words, pointer **a** goes within portion $\alpha(i)$ from position j = 0 (e.g., left edge 113) to the right (first direction) across a number of **a** code bits which do not belong to portion A; and pointer **b** goes within portion $\beta(i')$ from position $J_{BIT}$- I (right edge 114) to the left (second direction) across **a** number of **b** code bits. Pointers **a** and **b** are thereby guided by indicator $(z_1, z_2)$ telling which lines 115@1 1 or 115@2 to use in cases (1), (2) or (3) for i and for i'.

For example, possible values for pointer **a** are 0 $\sim$ 11 when partition $\alpha$ has 12 memory fields (e.g., $\alpha(1)$ in FIG. 6-1) or 0 $\sim$ 18 when partition $\alpha$ has 19 memory fields (e.g., $\alpha(2)$ in FIG. 6-2). The representation in the form *"min $\sim$ max"* stand for numbers between *min* (including) and *max* (also including), that is:

$$min \leq number \leq max. \qquad\qquad (6.3)$$

$$number \in [\ min \sim max\ ] \qquad\qquad (6.4)$$

Symbol $\in$ stands for "element of set [ ]". Similarly, pointer **b** can also have values 0 $\sim$ 12 or 0 $\sim$ 18.

In general, pointer **a** can assume values 0 $\sim$ $L_\alpha(i)$-1 and pointer b can assume values 0 $\sim$ $L_\beta(i)$-1, wherein the portion lengths are identified by tags T(1), T(2). For example, portion A could start at left edge 113 of partition $\alpha$ , (**a** = 0 ($j_A$ = 0)). Or, portions A could have e.g., $V'_A$ = I bit stored in portion $\alpha(i)$ of memory line 115@i (e.g., **a** = $L_\alpha(i)$-1 = 11 ) and the remaining $V'_A$ code bits are stored in memory line 115@(i+1).

FIG. 6-3 also illustrates an estimation for a possible of number start position combinations. Alternatively, start positions for portions A and B can be defined in reference to two lines. For example, $j'_A$ can indicate the distance from left edge 113 to a start position $j_A(1)$ in line 115@1 or to $j_A(2)$ in line 115@2. Similarly, $j'_B$ can indicate the distance from right edge 114 to start position $j_B(1)$ in line 115@1 or to $j_B(2)$ in line 115@2. Dashed frame 111 indicates

$$2 * L_{\alpha\ MIN} = 2* 12 = 24 \qquad\qquad (6.5)$$

bit fields 118 in memory lines 115@1 and 115@2 (assuming "short" partitions $\alpha(1)$ and $\alpha(2)$). Dashed frame 112 indicates also

$$2 * L_{\beta\ MIN} = 2 * 12 = 24 \qquad\qquad (6.6)$$

bit fields 118 in memory lines 115@1 and 115@2 (assuming short partitions $\beta(1)$ and $\beta(2)$. Dashed frame 116 indicates

$$2 * (L_{MAX} - L_{MAX}) = 2* (19 - 12) = 14 \qquad\qquad (6.7)$$

bit fields (assuming "long" $\alpha$, "short" $\beta$ or vice versa). Identifier $j'_A$ can be either $j_A(1)$ in line 115@1 or $j_A(2)$ in line 115 and point to one of the 24 fields in frame 111. Similarly, identifier $j'_B$ can point to one of the 24 fields in frame 112. The number of combinations $(j'_A, j'_B)$ in frames 111 and 112 is 24 * 24 = 576. The number of combinations $(j'_A, j'_B)$ in frame 116 is calculated as 14 * 14 = 196. The total number of combinations $(j'_A, j'_B)$ is obtained as, for example, 576 + 196 = 772. This number includes cases (1), (2), (3) and a further case if portion A and B would both be stored in line 115@2.

In this case, the $K_a$ = 5 bits and $K_b$ = 5 bits of pointers **a** and **b**, respectively, alone would be sufficient to indicate any number of combinations $(j'_A, j'_B)$ smaller then 2 to the power of $(K_a + K_b)$, for example 772 $\leq$ 1024. Optionally,

pointers **a** and **b** can form combination pointer C. Every combination ($j'_A, j'_B$) can be mapped to a single value of C. For example, pointer **a** forms the most significant bits (MSB) of C and pointer **b** forms the least significant bits (LSB) of C. For example, for position $j'_A = 1$ (portions A starting at left edge 113 in $\alpha(1)$ ) and $j'_B$ for any number $1 \sim 24$ (any possible starts of portion B in frame 112), C can have values $1 \sim 24$; for $j'_A = 2$ and $j'_B$ any $1 \sim 24$, C can have values $25 \sim 48$ and so on. Persons of skill in the art are able to implement such or a similar addressing mode (with storing and retrieving) without the need of further explanation.

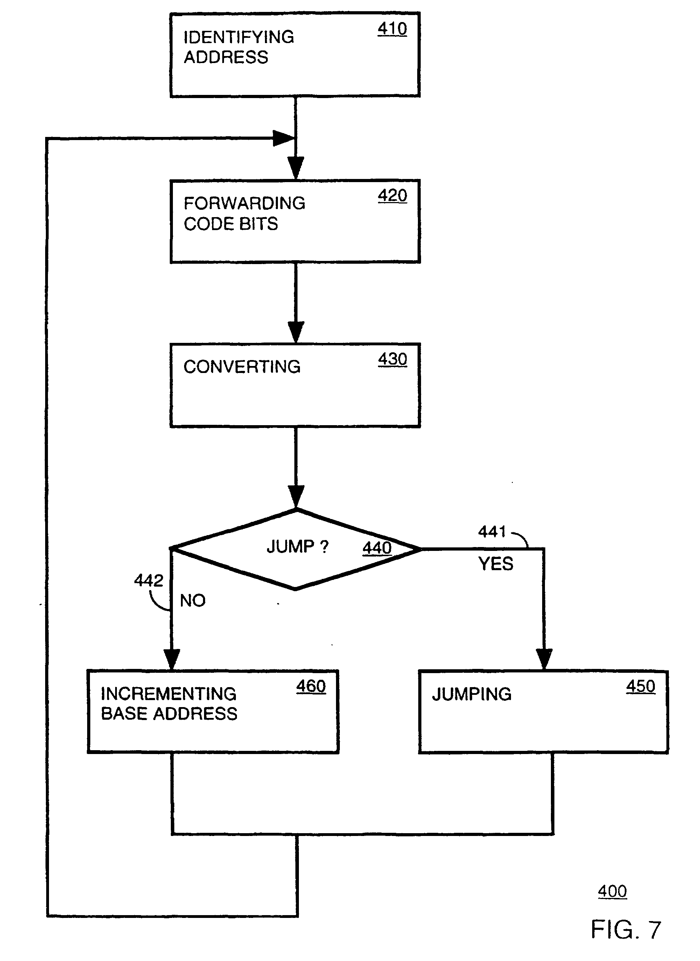

FIG. 7 illustrates a simplified flow chart diagram of retrieval method 400 of the present invention. Retrieval method 400 is, preferably, performed by execution system 100 and, preferably, comprises identifying an address step 410, forwarding code bits step 420, converting step 430, query step 440, jumping step 450, and incrementing base address step 460.

In *identifying an address step* 410, processor 140 checks the currently processed instruction for addresses, for example address 250 (cf. FIG. 5). For example, the instruction (cf. instruction word 210) can be a jump instruction which comprises an address. Optionally, the address itself is coded and is converted by converter 130. This is convenient, but not essential for the invention.

In *forwarding code bits step* 420, memory 110 receives base address 255 of address 250 which identifies memory line 115@i and 115@i'. Then, memory 110 conveniently sends all code bits 232 (cf. FIG. 3) $j = 1$ to $J_{BIT} - 1$ from memory lines 115@i and 115@i' to converter 130. The plurality of code bits 232 comprises portions A and B.

In *converting step* 430, decoders 131 and 132 of converter 130 receives pointers **a** and **b** from address 250 and selects portions A and B from the plurality of code bits 232. Converter 130 applies case distinction criteria (e.g., cases (1), (2), (3)). For example, converter 130 receives tags T(1) and T(2) from memory lines 115 and indicator z from address 250 (cf. FIG. 5). Decoders 131 and 132 substantially simultaneously converts portions A and B to instruction portions 212$A and 212$B (cf. FIG. 2) of instruction word 210. Start positions $j_A(i)$ and $j_B(i)$ are used by converters 131 and 132, respectively, for example, as shift pointers, to identify portions A and B from the plurality of code bits 232.

As illustrated by *query step* 440 ("JUMP ?"), the next steps depend on whether instruction word 210 has a jump indication ("yes"-line 441") line or does not have a jump indication ("no"-line 442"). In case of a jump instruction (line 441), memory 110 receives the new address from instruction words 210 (*jumping step* 450) and system 100 continues with forwarding step 420. In the other case (line 442), system 100 obtains the new address, preferably, by incrementing the base address *(incrementing base address step* 460) and also continues with forwarding step 420.

Persons of skill in the art are able, based on the description herein, to implement method 400 with hardware elements of execution system 100 without the need for further explanation.

Also, persons of skill in the art, based on the description herein, to apply the present invention also to memory line partitioning with P > 2. For such cases, the number of pointers, pointer vectors and tags can be increased.

While the invention has been described in terms of particular structures, devices and methods, those of skill in the art will understand based on the description herein that it is not limited merely to such examples and that the full scope of the invention is properly determined by the claims that follow.

Glossary of Terms

| | |
|---|---|
| @ | combiner for reference numbers and indices |
| A | identifies code portion |
| **a** | pointer to code portion A, in the drawings with a dashed line |
| B | identifies code portion |
| **b** | pointer to code portion B, in the drawings with a plain line |
| d | line distance |
| i, i' | indices for memory lines |
| j | position index for memory field within a memory line |
| $j_A(i)$, $j_B(i')$ | start positions of portions A and B |
| J | number of memory fields in memory line |
| $J_{BIT}$ | number of bit fields in memory line |
| $J_{TAG}$ | number of tag fields in memory line |
| $j_X(i)$ | partition index |
| K | number of address bits |
| $L_{MAX}$ | maximum partition length |
| $L_{MIN}$ | minimum partition length |
| $L_\alpha(i)$, $L_\beta(i)$, L | partition lengths |

| | |
|---|---|
| $n_A, n_B$ | number of portions in a single partition |
| $T(i)$ | line tag for indicating $j_X(i)$ |
| $P$ | number of portions |
| $U$ | number of bits in instruction portion |
| $V_A, V_B$ | portion lengths |
| $V'_A, V'_B$ | number of bits which go to a single memory line |
| $X_A, X_A$ | field distance |
| $Y$ | combination |
| $z = (z_1, z_2)$ | indication |
| $\$A, \$B$ | identifies instruction portions |
| $\alpha, \beta$ | partitions |
| (1) (2) (3) | as superscript, distinguish cases |
| $\in$ | element of |
| $\sim$ | from to, including |

**Claims**

1. A method (300) for providing a data structure (101) into a plurality of memory lines i (115) each having j = 0 to $J_{BIT}$-1 bit fields i@j, said method **characterized by** the following steps:

   receiving (310) code portions A (222@A) with $V_A \leq V_{MAX}$ code bits (232) and code portions B (222@B) with $V_B \leq V_{MAX}$ code bits (232), said portions A and B belonging to single instructions words (210);
   determining (320,340, 350) partition indices $j_X(i)$ and $j_X(i')$ of memory lines i and i', respectively, into
      partitions $\alpha(i)$ in fields i@0 to i@$j_X(i)$-1 and
      partitions $\beta(i')$ in fields i'@$j_X(i')$ to i'@$J_{BIT}$-1; and
   writing (360) portions A into $\alpha(i)$ and portions B into $\beta(i')$ such that | i - i' $\leq$ 1.

2. The method of claim 1 wherein $L_{MIN}$-1 $\leq j_X(i) \leq L_{MAX}$ with $L_{MIN}$ being the minimum length of said partitions $\alpha(i)$ and $\beta(i')$ and $L_{MAX}$ being the maximum length of said partitions $\alpha(i)$ and $\beta(i')$.

3. The method of claim 1 wherein $j_X(i)$ is either $j_X(i) = L_{MIN}$ or $j_X(i) = L_{MAX}$ and wherein in said writing step, an indication for $j_X(i)$ is written to memory line i by a single bit tag.

4. The method of claim 1 wherein in said determining step, a first partition tail of $\alpha(i)$ which does not store portion A and a second partition tail of $\beta(i')$ which does not store portion B are substantially balanced by changing said partition indices in iterations (340, 350).

5. The method of claim 1 wherein in said writing step, void portions are written into $\alpha(i)$ and $\beta(i')$.

6. The method of claim 1 **characterized by** a step of providing an address (250) for lines i and i', wherein said address has indicator bits (256) which indicate that:

   (1) $\alpha(i)$ and $\beta(i')$ are located in a common line i = i',

   (2) $\alpha(i)$ and $\beta(i')$ are located in consecutive lines i and i', or

   (3) $\beta(i')$ and $\alpha(i)$ are located in consecutive lines i' and i.

7. The method of claim 1 further comprising a step of providing an address (250) for lines i and i' wherein pointers (251, 252) indicate a start position of said portions A and B and indicate that:

   (1) $\alpha(i)$ and $\beta(i)$ are located in a common line i = i',

   (2) $\alpha(i)$ and $\beta(i')$ are located in consecutive lines i and i', or

   (3) $\beta(i')$ and $\alpha(i)$ are located in consecutive lines i' and i.

8. A method for storing pluralities of code portions (222) in pluralities of memory lines (115) with $J_{BIT}$ memory fields $0 \leq j \leq J_{BIT}-1$ each,
said method **characterized by** the following steps:

providing (310) a first code portion A with $V_A$ code bits and a second code portion B with $V_B$ code bits;
assigning a first start position $j_A(i)$ of said code portion A within a first memory line i, and assigning a second start position $j_B(i')$ for said code portion B in line i' which is either said first memory line or a second memory line (320, 330, 340, 350); and
writing (360) into said first memory line $V'_A \leq V_A$ code bits of said code portion A from position $j_A(i)$ in a first direction to position $(j_A(i) + V'_A) \leq j_X(i)$ and writing into first memory line or into said second memory line $V'_B \leq V_B$ code bits of said code portion B from position $j_B(i') \leq J_{BIT} -1$ in a second direction to position $j_X(i') \leq (j_B(i') - V'_B)$, wherein $j_X(i)$ and $j_X(i')$ are virtual partition indices chosen such, that said first portion A and said second portion B are stored in adjacent lines.

9. The method of claim 8 wherein in said writing step, said second direction is opposite to said first direction.

10. The method of claim 8, wherein in said writing step, a single code bit (232) is written into a single memory field (118) and wherein $V_A \leq V_{MAX}$ and $V_B \leq V_{MAX}$, with $V_{MAX}$ a maximum number of code bits in said code portions.

11. The method of claim 8 wherein the remaining $V_A-V'_A$ code bits of portion A are written to line i+1 and the $V_B-V'_B$ code bits of portion B are written to line i'+1.

12. The method of claim 8 further comprising a step of providing an address in which a base address is provided which indicates said first memory line i.

13. A method for storing a data structure (101) in a memory (110) comprising the steps of:

receiving (310) a first data portion (222@A) having a first length and a second data portion (222@B) having a second length;
selecting (320) an identifier (119) which virtually partitions a memory line into a first partition and a second partition;
determining (330)

• a first distance between said identifier and said first data portion,

• a second distance between said identifier and said second data portion,

• a combination of said first and second distances; and

comparing (340) said combination to a predetermined reference and (**a**) changing said identifier (350), repeating said determining and comparing steps or (**b**) storing (360) said first data portion in said first partition and store said second data portion in said second partition.

14. The method of claim 13 wherein in said selecting step, said identifier is selected at random from predetermined boundary values.

15. The method of claim 13 wherein said identifier is selected from a range of identifier values.

16. The method of claim 13 wherein said identifier is changed between two alternative values.

17. The method of claim 13 wherein in said selecting step, said identifier is assigned either a first value or a second value.

18. The method of claim 13 wherein in repetitions of said storing step, a first number $n_A$ of first data portions each having a maximum length $V_{A\ MAX}$ is written into said first partition and a second number $n_B$ of second data portions each having a maximum length $V_{B\ MAX}$ is written into said second partition of the same memory line, and wherein $n_A * V_{MIN} = n_B * V_{MAX}$.

**19.** The method of claim 13 wherein in said determining step, said first and second distances are obtained as if said first and second portions would have been already written into said memory line.

**20.** The method of claim 13 in which $j_A$ and $j_B$ are start positions of first data portion A within said first partition and second data portion B within said second partition, respectively, and $V_A$ and $V_B$ are lengths of data portions A and B, respectively, and $j_X$ is said identifier, wherein in said determining step,

- said first distance is obtained as $X_A = j_X - j_A - V_A$ ,

- said second distance is obtained as $X_B = j_B - j_X + 1 - V_B$, and

- said combination is $Y = | X_A - X_B |$ and wherein in said comparing step case (a) corresponds to $Y > Y_{MIN}$ and (b) corresponds to $Y \leq Y_{MIN}$.

**21.** The method of claim 13 wherein said receiving, selecting, and storing steps are repeated for further data portions going into said memory line or into further memory lines.

**22.** The method of claim 13 wherein in said selecting step, said identifier partitions a memory line (115) with $J_{BIT} = 31$ bit fields (118) into a first partition $\alpha$ and a second partition $\beta$ and wherein in said selecting step, said first value is $j_X = 12$ for partition $\alpha$ with 12 bit fields and partition $\beta$ with 19 bit fields and said second value is $j_X = 19$ for partition $\alpha$ with 19 bit fields and partition $\beta$ with 12 bit fields.

**23.** The method of claim 20 wherein $Y_{MIN} = 1$.

**Patentansprüche**

**1.** Verfahren (300) zum Bereitstellen einer Datenstruktur (101) in eine Mehrzahl von Speicherzeilen i (115), wobei jede j = 0 bis $J_{BIT}$-1 Bit-Felder i@j aufweist, wobei das Verfahren durch die folgenden Schritte gekennzeichnet ist:

Empfangen (310) von Codeabschnitten A (222@A) mit $V_A \leq V_{MAX}$ Codebits (232) und von Codeabschnitten B (222@B) mit $V_B \leq V_{MAX}$ Codebits (232), wobei die Abschnitte A und B zu einzelnen Befehlswörtern (210) gehören;
Bestimmen (320, 340, 350) von Unterteilungsindexen $j_X(i)$ und $j_X(i')$ von Speicherzeilen i bzw. i' in Unterteilungen $\alpha(i)$ in Feldern i@0 bis i@$j_X(i)$-1 und
Unterteilungen $\beta(i')$ in Feldern i'@$j_X(i')$ bis $J_{BIT}$-1; und
Schreiben (360) der Abschnitte A in $\alpha(i)$ und der Abschnitte B in $\beta(i')$, so dass
$|i - i'| \leq 1$.

**2.** Verfahren nach Anspruch 1, wobei $L_{MIN}$-1 $\leq j_X(i) \leq L_{MAX}$, wobei $L_{MIN}$ die minimale Länge der Unterteilungen $\alpha(i)$ und $\beta(i')$ und $L_{MAX}$ die maximale Länge der Unterteilungen $\alpha(i)$ und $\beta(i')$ ist.

**3.** Verfahren nach Anspruch 1, wobei $j_X(i)$ entweder $j_X(i) = L_{MIN}$ oder $j_X(i) = L_{MAX}$ und wobei in dem Schreibschritt eine Anzeige für $j_X(i)$ an die Speicherzeile i durch einen einzelnen Bit-Tag geschrieben wird.

**4.** Verfahren nach Anspruch 1, wobei in dem Bestimmungsschritt ein erster Unterteilungsschwanz von $\alpha(i)$, der den Abschnitt A nicht speichert, und ein zweiter Unterteilungsschwanz von $\beta(i')$, der den Abschnitt B nicht speichert, im Wesentlichen ausgeglichen werden durch Verändern der Unterteilungsindexe in Iterationen (340, 350).

**5.** Verfahren nach Anspruch 1, wobei in dem Schreibschritt freie Abschnitte in $\alpha(i)$ und $\beta(i')$ geschrieben werden.

**6.** Verfahren nach Anspruch 1, **gekennzeichnet durch** einen Schritt des Bereitstellens einer Adresse (250) für die Zeilen i und i', wobei die Adresse Anzeigerbits (256) aufweist, die anzeigen, dass:

(1) $\alpha(i)$ und $\beta(i')$ in einer gemeinsamen Zeile i = i' angeordnet sind,
(2) $\alpha(i)$ und $\beta(i')$ in aufeinander folgenden Zeilen i und i' angeordnet sind, oder
(3) $\beta(i')$ und $\alpha(i)$ in aufeinander folgenden Zeilen i' und i angeordnet sind.

**7.** Verfahren nach Anspruch 1, das weiterhin einen Schritt des Bereitstellens einer Adresse (250) für die Zeilen i und i' umfasst, wobei Zeiger (251, 252) eine Startposition der Abschnitte A und B anzeigen und anzeigen, dass:

(1) $\alpha(i)$ und $\beta(i)$ in einer gemeinsamen Zeile i = i' angeordnet sind,
(2) $\alpha(i)$ und $\beta(i')$ in aufeinander folgenden Zeilen i und i' angeordnet sind, oder
(3) $\beta(i')$ und $\alpha(i)$ in aufeinander folgenden Zeilen i' und i angeordnet sind.

**8.** Verfahren zum Speichern von Mehrzahlen von Codeabschnitten (222) in Mehrzahlen von Speicherzeilen (115) mit $J_{BIT}$ Speicherfeldern, jedes $0 \leq j \leq J_{BIT}-1$, wobei das Verfahren durch die folgenden Schritte gekennzeichnet ist:

Bereitstellen (310) eines ersten Codeabschnitts A mit $V_A$ Codebits und eines zweiten Codeabschnitts B mit $V_B$ Codebits;
Zuordnen einer ersten Startposition $j_A(i)$ des Codeabschnitts A innerhalb einer ersten Speicherzeile i und Zuordnen einer zweiten Startposition $j_B(i')$ für den Codeabschnitt B in der Zeile i', die entweder die erste Speicherzeile oder eine zweite Speicherzeile (320, 330, 340, 350) ist; und
Schreiben (360) von $V'_A \leq V_A$ Codebits des Codeabschnitts A von der Position $j_A(i)$ in eine erste Richtung zu einer Position $(j_A(i) + V'_A) \leq j_X(i)$ in die erste Speicherzeile und Schreiben von $V'_B \leq V_B$ Codebits von dem Codeabschnitt B von der Position $j_B(i') \leq J_{BIT}-1$ in eine zweite Richtung zu der Position $j_X(i') \leq (j_B(i') - V'_B)$ in die erste Speicherzeile oder in die zweite Speicherzeile, wobei $j_X(i)$ und $j_X(i')$ derart ausgewählte virtuelle Unterteilungsindexe sind, dass der erste Abschnitt A und der zweite Abschnitt B in aneinandergrenzenden Zeilen gespeichert werden.

**9.** Verfahren nach Anspruch 8, wobei in dem Schreibschritt die zweite Richtung entgegengesetzt der ersten Richtung ist.

**10.** Verfahren nach Anspruch 8, wobei in dem Schreibschritt ein einzelnes Codebit (232) in ein einzelnes Speicherfeld (118) geschrieben wird und wobei $V_A \leq V_{MAX}$ und $V_B \leq V_{MAX}$, wobei $V_{MAX}$ eine maximale Anzahl von Codebits in den Codeabschnitten ist.

**11.** Verfahren nach Anspruch 8, wobei die restlichen $V_A - V'_A$ Codebits des Abschnitts A an die Zeile i+1 geschrieben werden und die $V_B - V'_B$ Codebits des Abschnitts B an die Zeile i'+1 geschrieben werden.

**12.** Verfahren nach Anspruch 8, weiterhin umfassend einen Schritt des Bereitstellens einer Adresse, in der eine Basisadresse bereitgestellt wird, welche die erste Speicherzeile i anzeigt.

**13.** Verfahren zum Speichern einer Datenstruktur (101) in einem Speicher (110), das folgende Schritte umfasst:

Empfangen (310) eines ersten Datenabschnitts (222@A) mit einer ersten Länge und eines zweiten Datenabschnitts (222@B) mit einer zweiten Länge;
Auswählen (320) eines Identifizierers (119), der eine zweite Unterteilung unterteilt;
Bestimmen (330)

- eines ersten Abstands zwischen dem Identifizierer und dem ersten Datenabschnitt,
- eines zweiten Abstands zwischen dem Identifizierer und dem zweiten Datenabschnitt,
- einer Kombination des ersten und des zweiten Abstands; und

Vergleichen (340) der Kombination mit einem vorbestimmten Bezug und (**a**) Verändern des Identifizierers (350), Wiederholen der Bestimmungs- und Vergleichsschritte oder (b) Speichern (360) des ersten Datenabschnitts in der ersten Unterteilung und Speichern des zweiten Datenabschnitts in der zweiten Unterteilung.

**14.** Verfahren nach Anspruch 13, wobei in dem Auswahlschritt der Identifizierer aus vorbestimmten Begrenzungswerten wahlfrei ausgewählt wird.

**15.** Verfahren nach Anspruch 13, wobei der Identifizierer aus einem Bereich von Identifiziererwerten ausgewählt wird.

**16.** Verfahren nach Anspruch 13, wobei der Identifizierer zwischen zwei alternativen Werten verändert wird.

**17.** Verfahren nach Anspruch 13, wobei in dem Auswahlschritt dem Identifizierer entweder ein erster Wert oder ein zweiter Wert zugeordnet wird.

18. Verfahren nach Anspruch 13, wobei in Wiederholungen abschnitten, von denen jeder eine maximale Länge $V_{A\,MAX}$ aufweist, in die erste Unterteilung geschrieben wird und eine zweite Anzahl $n_B$ von zweiten Datenabschnitten, von denen jeder eine maximale Länge $V_{B\,MAX}$ aufweist, in die zweite Unterteilung derselben Speicherzeile geschrieben wird, und wobei $n_A * V_{MIN} = n_B * V_{MAX}$.

19. Verfahren nach Anspruch 13, wobei in dem Bestimmungsschritt der erste und der zweite Abstand so erhalten werden, als ob der erste und der zweite Abschnitt bereits in die Speicherzeile geschrieben worden wären.

20. Verfahren nach Anspruch 13, in dem $j_A$ und $j_B$ Startpositionen des ersten Datenabschnitts A innerhalb der ersten Unterteilung bzw. des zweiten Datenabschnitts B innerhalb der zweiten Unterteilung sind und $V_A$ und $V_B$ Längen der Datenabschnitte A bzw. B sind und $j_X$ der Identifizierer ist, wobei in dem Bestimmungsschritt

- der erste Abstand erhalten wird als $X_A = j_X - j_A - V_A$,
- der zweite Abstand erhalten wird als $X_B = j_B - j_X + 1 - V_B$, und
- die Kombination $Y = |X_A - X_B|$ ist und wobei in dem Vergleichsschritt der Fall (a) $Y > Y_{MIN}$ und (b) $Y \leq Y_{MIN}$ entspricht.

21. Verfahren nach Anspruch 13, wobei die Empfangs-, Auswahl- und Speicherschritte für weitere, in die Speicherzeile oder in weitere Speicherzeilen gehende Datenabschnitte wiederholt werden.

22. Verfahren nach Anspruch 13, wobei in dem Auswahlschritt der Identifizierer eine Speicherzeile (115) mit $J_{BIT} = 31$ Bit-Feldern (118) in eine erste Unterteilung $\alpha$ und eine zweite Unterteilung $\beta$ unterteilt und wobei in dem Auswahlschritt der erste Wert für die Unterteilung $\alpha$ mit 12 Bit-Feldern und die Unterteilung $\beta$ mit 19 Bit-Feldern $j_X = 12$ ist und der zweite Wert für die Unterteilung $\alpha$ mit 19 Bit-Feldern und die Unterteilung $\beta$ mit 12 Bit-Feldern $j_X = 19$ ist.

23. Verfahren nach Anspruch 20, wobei $Y_{MIN} = 1$.

**Revendications**

1. Procédé (300) de formation d'une structure de données (101) dans plusieurs lignes de mémoire i (115), ayant chacune j = 0 à $J_{BIT}$ - 1 champs de bits i@j, ledit procédé étant **caractérisé par** les étapes suivantes, qui consistent à :

   recevoir (310) des parties de code A (222@A), ayant $V_A = V_{MAX}$ bits de code (232), et des parties de code B (222@B), ayant $V_B = V_{MAX}$ bits de code (232), lesdites parties A et B appartenant à un même mot d'instruction (210) ;

   déterminer (320, 340, 350) des indices $j_x(i)$ et $j_x(i')$ respectifs de partitionnement des lignes de mémoire i et i', en
   partitions $\alpha(i)$ dans les champs i@0 à i@ $j_x(i)$ - 1 ; et
   partitions $\beta(i')$ dans les champs i'@ $j_x(i')$ à i'@$J_{BIT}$ - 1 ; et

   écrire (360) les parties A dans la partition $\alpha(i)$ et les parties B dans la partition $\beta(i')$, de telle sorte que | i - i' | = 1.

2. Procédé selon la revendication 1, dans lequel $L_{MIN}$ - 1 = $j_x(i)$ = $L_{MAX}$, où $L_{MIN}$ est la longueur minimale desdites partitions $\alpha(i)$ et $\beta(i')$ et $L_{MAX}$ est la longueur maximale desdites partitions $\alpha(i)$ et $\beta(i')$.

3. Procédé selon la revendication 1, dans lequel $j_x(i)$ est soit égal à $L_{MIN}$, soit égal à $L_{MAX}$, et dans lequel, dans ladite étape d'écriture, une indication concernant $j_x(i)$ est écrite dans la ligne de mémoire i par une étiquette à un seul bit.

4. Procédé selon la revendication 1, dans lequel, dans ladite étape de détermination, une première fin de partition de la partition $\alpha(i)$, qui ne contient pas de partie A, et une deuxième fin de partition de la partition $\beta(i')$, qui ne contient pas de partie B, sont essentiellement équilibrées par modification desdits indices de partition dans les itérations (340, 350).

5. Procédé selon la revendication 1, dans lequel, dans ladite étape d'écriture, des parties vides sont écrites dans les

partitions $\alpha$(i) et $\beta$(i').

6. Procédé selon la revendication 1, **caractérisé par** une étape qui consiste à définir une adresse (250) pour les lignes i et i', où ladite adresse comprend des bits indicateurs (256) qui indiquent que :

    (1) $\alpha$(i) et $\beta$(i') sont situées dans une ligne commune i = i',

    (2) $\alpha$(i) et $\beta$(i') sont situées dans des ligne consécutives i et i', ou

    (3) $\beta$(i') et $\alpha$(i) sont situées dans des lignes consécutives i' et i.

7. Procédé selon la revendication 1, comprenant, en outre, une étape qui consiste à définir une adresse (250) pour les lignes i et i', où des pointeurs (251, 252) indiquent une position de départ desdites parties A et B, et indiquent que :

    (1) $\alpha$(i) et $\beta$(i') sont situées dans une ligne commune i = i',

    (2) $\alpha$(i) et $\beta$(i') sont situées dans des ligne consécutives i et i', ou

    (3) $\beta$(i') et $\alpha$(i) sont situées dans des lignes consécutives i' et i.

8. Procédé de stockage de plusieurs parties de code (222) dans plusieurs lignes de mémoire (115) ayant chacune $J_{BIT}$ champs de mémoire $0 = j = J_{BIT} - 1$,
    ledit procédé étant **caractérisé par** les étapes suivantes, qui consistent à :

    définir (310) une première partie de code A ayant $V_A$ bits de code et une deuxième partie de code B ayant $V_B$ bits de code ;

    attribuer (320, 330, 340, 350) une première position de départ $j_A$(i) de ladite partie de code A à l'intérieur d'une première ligne de mémoire i, et attribuer une deuxième position de départ $j_B$(i') pour ladite partie de code B à l'intérieur de la ligne i', qui est soit ladite première ligne de mémoire, soit une deuxième ligne de mémoire ; et

    écrire (360), dans ladite première ligne de mémoire, $V'_A = V_A$ bits de code de ladite partie de code A, à partir de la position $j_A$(i), dans un premier sens, jusqu'à une position $(j_A(i) + V'_A) = j_x(i)$, et écrire, dans la première ligne de mémoire ou dans ladite deuxième ligne de mémoire, $V'_B = V_B$ bits de code de ladite partie de code B, à partir de la position $J_B(i') = J_{BIT} - 1$, dans un deuxième sens, jusqu'à la position $j_x(i') = (j_B(i') - V'_B)$, où $j_x$(i) et $j_x$(i') sont des indices de partitions virtuelles choisis de telle sorte que ladite première partie A et ladite deuxième partie B soient stockées dans des lignes adjacentes.

9. Procédé selon la revendication 8, dans lequel, dans ladite étape d'écriture, ledit deuxième sens est opposé audit premier sens.

10. Procédé selon la revendication 8, dans lequel, dans ladite étape d'écriture, un seul bit de code (232) est écrit dans un seul champ de mémoire (118), et dans lequel $V_A = V_{MAX}$ et $V_B = V_{MAX}$, où $V_{MAX}$ est un nombre maximal de bits de code dans lesdites parties de code.

11. Procédé selon la revendication 8, dans lequel les $V_A - V'_A$ bits de code restants de la partie A sont écrits dans la ligne i + 1, et les $V_B - V'_B$ bits de code de la partie B sont écrits dans la ligne i' + 1.

12. Procédé selon la revendication 8, comprenant, en outre, une étape qui consiste à définir une adresse dans laquelle est définie une adresse de base indiquant ladite première ligne de mémoire i.

13. Procédé de stockage d'une structure de données (101) dans une mémoire (110), comprenant les étapes qui consistent à :

    recevoir (310) une première partie de données (222@A) ayant une première longueur et une deuxième partie de données (222@B) ayant une deuxième longueur ;

sélectionner (320) un identifiant (119) qui partitionne virtuellement une ligne mémoire en une première partition et une deuxième partition ;

déterminer (330)

- une première distance entre ledit identifiant et ladite première partie de données ;

- une deuxième distance entre ledit identifiant et ladite deuxième partie de données ;

- une combinaison desdites première et deuxième distances ; et

comparer (340) ladite combinaison à une référence prédéterminée, et (a) changer ledit identifiant (350), répéter lesdites étapes de détermination et de comparaison, ou (b) stocker (360) ladite première partie de données dans ladite première partition et stocker ladite deuxième partie de données dans ladite deuxième partition.

14. Procédé selon la revendication 13, dans lequel, dans ladite étape de sélection, ledit identifiant est sélectionné au hasard parmi des valeurs limites prédéterminées.

15. Procédé selon la revendication 13, dans lequel ledit identifiant est sélectionné dans une plage de valeurs d'identifiant.

16. Procédé selon la revendication 13, dans lequel ledit identifiant varie entre deux valeurs différentes.

17. Procédé selon la revendication 13, dans lequel, dans ladite étape de sélection, ledit identifiant est affecté d'une première valeur ou bien d'une deuxième valeur.

18. Procédé selon la revendication 13, dans lequel, dans les répétitions de ladite étape de stockage, un premier nombre $n_A$ de premières parties de données, ayant chacune une longueur maximale $V_{A\,MAX}$, est écrit dans ladite première partition, et un deuxième nombre $n_B$ de deuxièmes parties de données, ayant chacune une longueur maximale $V_{B\,MAX}$, est écrit dans ladite deuxième partition de la même ligne de mémoire, où $n_A \times V_{MIN} = n_B \times V_{MAX}$.

19. Procédé selon la revendication 13, dans lequel, dans ladite étape de détermination, lesdites première et deuxième distances sont obtenues comme si lesdites première et deuxième parties avaient déjà été écrites dans ladite ligne de mémoire.

20. Procédé selon la revendication 13, dans lequel $j_A$ et $j_B$ sont les positions de départ respectives de la première partie de données A dans ladite première partition et de la deuxième partie de données B dans ladite deuxième partition, $V_A$ et $V_B$ sont les longueurs respectives des parties de données A et B, et $j_x$ est ledit identifiant ;
dans lequel, dans ladite étape de détermination,

- ladite première distance est obtenue par $X_A = j_x - j_A - V_A$ ;

- ladite deuxième distance est obtenue par $X_B = j_B - j_x + 1 - V_B$ ; et

- ladite combinaison est $Y = |X_A - X_B|$ ;

et dans lequel, dans ladite étape de comparaison, le cas (a) correspond à $Y > Y_{MIN}$ et le cas (b) correspond à $Y = Y_{MIN}$.

21. Procédé selon la revendication 13, dans lequel lesdites étapes de réception, de sélection et de stockage sont répétées pour d'autres parties de données, allant dans ladite ligne de mémoire ou dans d'autres lignes de mémoire.

22. Procédé selon la revendication 13, dans lequel, dans ladite étape de sélection, ledit identifiant partitionne une ligne de mémoire (115), ayant $J_{BIT} = 31$ champs de bits (118), en une première partition $\alpha$ et une deuxième partition $\beta$, et dans lequel, dans ladite étape de sélection, ladite première valeur est $j_x = 12$ pour donner une partition $\alpha$ ayant 12 champs de bits et une partition $\beta$ ayant 19 champs de bits, et ladite deuxième valeur est $j_x = 19$ pour donner une partition $\alpha$ ayant 19 champs de bits et une partition $\beta$ ayant 12 champs de bits.

**23.** Procédé selon la revendication 20, dans lequel $Y_{MIN} = 1$.

FIG. 1

EP 0 945 794 B1

210 INSTRUCTION WORD

u=0                                          15  0                                                              15

INSTRUCTION PORTION
212@$A

212@$B

231

241
CODING

242
DECODING

230      232

CODE PORTION
222@A

222@B

220 CODE WORD

FIG. 2

110    FIG. 3

START

RECEIVING
A, B, V$_A$, V$_B$          310

SELECTING
BOUNDARY          320

CALCULATING          330
TAILS          X$_A$, X$_B$
COMBINATION
          Y = / X$_A$ - X$_B$ /

Y > Y$_{MIN}$

COMPARING 340          341          MOVING BOUNDARY          350

342          Y ≤ Y$_{MIN}$

351

STORING PORTIONS A, B          360

PROVIDING ADDRESS          370

300

STORAGE
METHOD

FIG. 4

POINTERS

255  256   251   252

| BASE ADDRESS | z | a | b |

250    FIG. 5

$K_q = 20$ bit

$K = 32$ bit

$K_z$ = 2 bit   $K_a$ = 5 bit   $K_b$ = 5 bit

EP 0 945 794 B1

J = 32 bit

$J_{BIT}$ = 31 bits

$L_{MIN}$ = 12 bits     $L_{MAX}$ = 19 bits

$L_{MAX}$ = 19 bits     $L_{MIN}$ = 12 bits

T(1)

115@1   a → A   B ← b   1

115@2   0   FIG. 6-1

T(2)

$jA(i) = a$     $jA(i) = J_{BIT} - b$

113   PARTITION α(1)   119@1   PARTITION β(1)   114

a → A   0

B ← b   1   FIG. 6-2

PARTITION α(2)   119@2   PARTITION β(2)

B ← b   1

a → A   0   FIG. 6-3

111   116   112

25

```
        ┌──────────────────────────┐
        │ IDENTIFYING        410   │
        │ ADDRESS                  │
        └────────────┬─────────────┘
                     │
   ┌─────────────────┤
   │                 ▼
   │    ┌──────────────────────────┐
   │    │ FORWARDING         420   │
   │    │ CODE BITS                │
   │    └────────────┬─────────────┘
   │                 │
   │                 ▼
   │    ┌──────────────────────────┐
   │    │ CONVERTING         430   │
   │    │                          │
   │    └────────────┬─────────────┘
   │                 │
   │                 ▼
   │              ◇ JUMP ?  440 ◇──────── 441
   │          442 ╱            ╲          YES
   │           NO              
   │            ▼                          ▼
   │  ┌────────────────────┐    ┌────────────────────┐
   │  │ INCREMENTING  460  │    │ JUMPING      450   │
   │  │ BASE ADDRESS       │    │                    │
   │  └─────────┬──────────┘    └─────────┬──────────┘
   │            │                         │
   └────────────┴─────────────────────────┘
```

400

FIG. 7